# EUROPEAN PATENT APPLICATION

(11) **EP 1 468 737 A1**
(43) Date of publication of application: **20.10.2004**
(21) Application number: 02755663.8
(22) Date of filing: 26.07.2002
(51) Int. Cl.: B01J 35/02, B01J 35/06, B01J 37/02, B01J 21/06, B01D 53/86

(54) **PHOTOCATALYTIC COMPOSITE MATERIAL AND METHOD FOR PREPARATION THEREOF**

(30) Priority: 21.01.2002 JP 2002011734
(71) Applicant: Sumitomo Titanium Corporation, Amagasaki-shi, Hyogo 660-8533 (JP)
(72) Inventor: SHIMOSAKI, Shinji, Sumitomo titanium Corporation, Amagasaki-shi, Hyogo 660-8533 (JP); OGASAWARA, Tadashi, Sumitomo titanium Corporation, Amagasaki-shi, Hyogo 660-8533 (JP); WATANABE, Munetoshi, Sumitomo titanium Corporation, Amagasaki-shi, Hyogo 660-8533 (JP); ODA, Kouji, c/o Sumitomo titanium Corporation, Amagasaki-shi, Hyogo 660-8533 (JP); NAGAOKA, Sadanobu, Sumitomo titanium Corporation, Amagasaki-shi, Hyogo 660-8533 (JP); MASAKI, Yasuhiro, Sumitomo Metal Industries, Ltd., Osaka-shi, Osaka 541-0041 (JP); YAO, Tadashi, Sumitomo Metal Industries, Ltd., Osaka-shi, Osaka 541-0041 (JP)
(74) Representative: Schrimpf, Robert
(86) International application number: PCT/JP2002/007598
(87) International publication number: WO 2003/061828

(57) **Abstract**

A photocatalytic composite material having a high activity and good durability is produced by coating the surface of a substrate with a continuous film of titanium oxide by vapor deposition from titanium tetrachloride. In the case of a substrate which is a mass of inorganic fibers such as glass cloth, the individual fibers or filaments in the mass are coated with titanium oxide. The vapor deposition is performed by contacting the substrate, such as a mass of inorganic fibers, which has been heated to 100 - 300 °C, with a mixture of distilled pure titanium tetrachloride vapor and water vapor to form a film of a titanium oxide precursor on the surface of the substrate. Then, the substrate is heated at 300 - 600 °C in an oxidizing atmosphere, resulting in the formation on the substrate surface of a continuous film of a photocatalyst having a high activity and good adhesion to the substrate and comprising crystalline titanium oxide with an average crystallite diameter of 50 nm or smaller.

## Description

### Technical Field

This invention relates to a photocatalytic composite material in the form of a mass of fibers (fibrous mass) such as a woven fabric or in any other form which is highly active and durable and the costs of which are relatively low and to a method for manufacturing the same. The present invention also relates to a product which is formed from the photocatalytic composite material and is capable of depolluting the environment.

### Background Art

Active attempts have been made at applying the photocatalytic activity of titanium oxide to environmental depollution including deodorization, antimicrobial and antifungal effects, and to decomposition of deposited grime and harmful substances by fixing titanium oxide mainly in the form of a thin film on substrates of various shapes and materials.

Fibrous masses of glass fibers such as glass wool and glass cloth have conventionally been used as a substrate on which titanium oxide is fixed, since they make it possible to provide a large surface area for reaction and are not decomposed by the oxidizing ability of a photocatalyst.

JP 7-96202A (1995) discloses a photocatalyst for use in removing harmful substances in a fluid. The photocatalyst has a titanium oxide film formed on the surface of a fiberglass mass by dipping the mass in a solution of a photo-setting organic resin and a precursor of titanium oxide (such as a titanium alkoxide, titanium tetrachloride, or titanium acetate) for wet-process coating, followed by drying and calcinating to remove organic matter.

A method for forming a titanium oxide film by applying a solution of a hydrolyzable organic titanium compound such as a titanium alkoxide to a substrate followed by calcination is well known as a so-called sol-gel method.

Vapor deposition with titanium tetrachloride is reported as a method for forming a titanium oxide film on a flat surface substrate such as a tile. Titanium tetrachloride is hydrolyzed by a reaction with water, and the resulting hydrolyzate is then condensed to form titanium oxide. Therefore, more precisely, this vapor deposition is a kind of chemical vapor deposition. For example, JP 2000-72575A discloses photocatalytic tiles having a titanium oxide film with a thickness of at least 0.8 micrometers which is formed from titanium tetrachloride vapor.

Photocatalytic composite materials having a titanium oxide film formed on the surface of a substrate, and particularly, a fiberglass substrate, encounter the problem that detachment and cracking occur in the titanium oxide film which is formed, so the film tends to readily peel off. As a result, the photocatalytic activity is low from the beginning due to partial peeling of the titanium oxide film, or it is gradually decreased to worsen its durability.

The detachment and cracking of a titanium oxide film are caused by relaxation of stress which is unavoidably generated in the film during its formation. Since a titanium oxide film does not have flexibility as good as that of a film of an organic resin, stress relaxation of the titanium oxide film tends to cause detachment and cracking of the film. Particularly, on the surface of glass fibers, which is a substrate having a small diameter, stress relaxation of the film occurs easily in the circumferential direction, so cracks and detachment are frequently observed in a titanium oxide film formed on the surface, and sometimes even peeling of the film takes place.

When a titanium oxide film is formed by application of a coating fluid which contains an organic resin as described in JP 7-96202A (1995), the volume shrinkage and the stress generated therefrom become significant, since the organic resin is removed by thermal decomposition during a film forming process. Therefore, cracking and detachment of the film tend to occur not only in the circumferential direction but also in the lengthwise direction of the fibers.

In the just-mentioned method and the sol-gel method, a long-term calcination step must be performed following application in order to remove organic matter. Such long-term calcination is costly, and may cause the growth of titanium oxide particles (crystal grains) to proceed excessively, thereby decreasing the photocatalytic activity.

The formation of a titanium oxide film by vapor deposition with titanium tetrachloride (this vapor deposition being a kind of chemical vapor deposition in a strict sense as described earlier, but hereinafter being referred to merely as vapor deposition) has heretofore been applied to a two-dimensional planar surface and has not been considered for application to a substrate having a complicated structure with three-dimensional spaces such as a mass of glass fibers.

When a titanium oxide film is formed by vapor deposition on the surface of a tile or glass plate, it is possible to obtain a film having improved peeling resistance with a shorter heating time compared with other methods. However, so far, it has been difficult to form a continuous film of titanium oxide having a durable and high photocatalytic activity even using the vapor deposition method.

It is an object of the present invention to provide a process which is capable of forming a continuous photocatalytic film of titanium oxide having a high activity and improved peeling resistance at relatively low costs on various substrates and a photocatalytic composite material obtained by the process.

Another object of the present invention is to provide a photocatalytic composite material which comprises a fibrous mass as a substrate and which is capable of maintaining a high photocatalytic function and a process for producing such a material at relatively low cost.

### Disclosure of the Invention

The present inventors found that a highly active photocatalytic continuous film of titanium oxide with a small average crystallite diameter can be formed by performing vapor deposition with titanium tetrachloride and the subsequent heating under particular temperature conditions and that application of this process to a fibrous mass makes it possible to produce a highly active and durable photocatalytic composite material in which the surfaces of individual fibers are coated with a continuous film of titanium oxide which is substantially free of detachment, cracks, and peeling.

In a first embodiment, the present invention is a photocatalytic composite material comprising a mass of inorganic fibers characterized in that the surfaces of the individual fibers are coated with a photocatalytic continuous film of titanium oxide.

The term "individual fibers" means the prime or unit fibers constituting the fibrous mass. In the case of filament fibers, the filaments are the individual fibers, and each filament is coated with a photocatalytic continuous film of titanium oxide according to the present invention.

Coating with a photocatalytic "continuous film" of titanium oxide indicates that a continuous film (i.e., one which is substantially free from peeling, detachment and cracking) of titanium oxide having a nearly uniform thickness is formed on the entire surfaces of the individual fibers. A decision whether a composite material has a continuous film or not can be made by observation of the appearance of the material under an SEM (scanning electron microscope), AFM (atomic force microscope), STM (scanning tunneling microscope), or the like. Since a film formed on a fiber may be uneven at the ends of the fiber, the decision should be made at a position on the fiber other than at the ends thereof.

In a second embodiment, the present invention is a photocatalytic composite material comprising a substrate having an inorganic surface characterized in that at least part of the inorganic surface is coated with a photocatalytic continuous film of titanium oxide which is formed by vapor deposition and which has an average crystallite diameter of 50 nm or smaller. The substrate may have any shape or form.

A photocatalytic composite material according to the first embodiment can be produced by a process characterized in that it comprises a vapor deposition step in which a mass of inorganic fibers which has been heated at a temperature of 100 - 300 °C is brought into contact with titanium tetrachloride vapor and water vapor to form a film of a titanium oxide precursor on the surfaces of the individual fibers, and a heating step in which the fibrous mass is heated in an oxidizing atmosphere to convert the precursor film into a photocatalytic continuous film of titanium oxide.

A photocatalytic composite material according to the second embodiment can be produced by a process characterized in that it comprises a vapor deposition step in which a substrate having an inorganic surface which has been heated at a temperature of 100 - 300 °C is treated such that at least part of the inorganic surface is brought into contact with titanium tetrachloride vapor and water vapor to form a film of a titanium oxide precursor on the surface, and a heating step in which the substrate is heated in an oxidizing atmosphere at a temperature of 300 - 600 °C to convert the precursor film into a photocatalytic continuous film of crystalline titanium oxide having an average crystallite diameter of 50 nm or smaller.

The present invention also provides a product and a fibrous product having environmental depollution effects comprising a photocatalytic composite material according to the present invention. These products exhibit environmental depollution functions such as deodorization, antimicrobial and antifungal activities, and decomposition of deposited grime and harmful substances. The product and fibrous product encompass not only end products but also semi-finished products and raw materials.

### Brief Description of the Drawings

Figure 1 is a schematic diagram showing the arrangement of a manufacturing system which can be used to produce a photocatalytic composite material according to the present invention.
Figures 2A and 2B are SEM images at magnifications of 500X and 2,000X, respectively, showing the appearance of a photocatalytic composite material according to the present invention produced by vapor deposition on a substrate of glass fibers.
Figures 3A and 3B are SEM images at magnifications of 500X and 2,000X, respectively, showing the appearance of a comparative photocatalytic composite material produced by a wet process.
Figures 4 and 5 are each SEM images at a magnification of 7,500X showing the appearance of a photocatalytic composite material produced by vapor deposition on a substrate of glass fibers wherein the temperature of the substrate is outside the range defined herein.
Figure 6 is an SEM image showing the cross section of a photocatalytic film formed on a quartz plate by a process according to the present invention.
Figure 7 is an SEM image showing the cross section of a photocatalytic film formed on a quartz plate by vapor deposition wherein the temperature of the substrate is outside the range defined herein.

### Description of Embodiments of the Invention

A photocatalytic composite material according to the present invention has a substrate in which the surface of the substrate is coated with a continuous film of titanium oxide having a photocatalytic activity (which may hereinafter be referred to as a photocatalytic film). When the substrate is a fibrous mass, the surfaces of the individual fibers (commonly filaments) constituting the mass are coated with the photocatalytic film.

The surface of a substrate on which the photocatalytic film is formed is an inorganic surface which does not undergo decomposition or degradation by the activity of the photocatalytic film. The substrate itself may be made of an organic substance (e.g., a heat-resisting resin) as long as it can withstand heating in the heating step subsequent to vapor deposition. In such a case, however, the surface of the substrate on which the photocatalytic film is formed must be previously coated with an inorganic substance.

Examples of a substrate other than a fibrous mass include ceramic products, particularly for building or outdoor use, such as tiles, ceramics, and porcelain goods, glass plates and glass products, stone, building materials such as lightweight concrete panels and slate, metal plates, particularly those which are used without painting, such as stainless steel sheets, aluminum sheets and titanium sheets, and the like. The substrate may be porous (e.g., particles or a shaped mass of a zeolite, a foam metal, a foam ceramic, or a porous sintered metal).

When the substrate is a fibrous mass, a mass of inorganic fibers is used. Preferred inorganic fibers are glass fibers which are inexpensive and available in various types. Ceramic fibers such as alumina and silicon carbide fibers as well as metal fibers such as stainless steel, copper, and steel fibers can also be used.

The present invention will be described below mainly with respect to embodiments in which the substrate is a mass of glass fibers. However, the present invention can be applied generally in the same way when the substrate is a mass of other inorganic fibers or in a form other than a fibrous mass.

The type of glass fibers which are used in the present invention is not critical. For example, fibers of a SiO₂ (silica)-based glass such as quartz-rich glass, and fibers of glasses such as E-glass, T-glass, C-glass, S-glass, and Pyrex™ can be used. The average fiber diameter of glass fibers is not limited, but it is preferably in the range of about 5 - 50 micrometers. A smaller fiber diameter is suitable when the substance which is intended to be photocatalytically decomposed is a highly diffusible gas or liquid. On the other hand, for decomposition of deposited grime, a larger fiber diameter is preferably selected.

The mass of inorganic fibers is usually a mechanically gathered mass of inorganic fibers and has no bonds between intersecting fibers. However, it is possible to bond intersecting fibers by fusion or other means. In this case, the surfaces of the individual fibers except the bonded intersection points are coated with a photocatalytic film.

The form of a mass of glass fibers may be a roving of filaments, chopped strand, spun yarn of filaments (twisted or untwisted), woven fabric called glass cloth, non-woven fabric, or glass wool made of filaments interlaced with each other in a disorderly manner. An easy to handle form is a woven fabric of glass fibers, i.e., a glass cloth. The glass cloth may be of any weave, and it may be plain-woven, twilled, or satin-woven. The thread count, thickness, and tensile strength of the glass cloth are not restricted either, but it is preferable that the thread count be between 10 and 100 threads per inch for both warps and wefts, the cloth thickness be between 0.01 and 2.0 mm, and its tensile strength be at least 5 kgf/inch (19 N/cm).

In a photocatalytic composite material according to the present invention, the surfaces of the individual glass fibers constituting a fibrous mass as a substrate are coated with a continuous photocatalytic film of titanium oxide. If the photocatalytic film includes discontinuities such as those formed by detachment, cracking, or peeling, its photocatalytic activity decreases with time.

The titanium oxide which forms the continuous photocatalytic film may be either amorphous or crystalline, or it may be a mixture of these forms. From the standpoint of photocatalytic activity, it is preferably a crystalline titanium oxide, particularly of anatase form. When a photocatalytic film is formed from a crystalline titanium oxide, its photocatalytic activity decreases if the crystals become coarse. Therefore, the titanium oxide crystals forming the photocatalytic film preferably have an average crystallite diameter of 50 nm or smaller. The average crystallite diameter is more preferably 30 nm or smaller. If the average crystallite diameter of titanium oxide is overly large, not only the photocatalytic activity of the film but also the adhesion of the photocatalytic film to the substrate decrease, thereby adversely affecting the durability of the photocatalytic composite material. The average crystallite diameter of titanium oxide can be controlled by the temperature of the substrate during vapor deposition and the conditions for heating which is carried out subsequent to vapor deposition.

The photocatalytic titanium oxide may contain one or more metal oxides selected from silicon, zinc, zirconium, and aluminum oxides for activation. In this case, with respect to the structure of the photocatalytic film, these oxides may coexist with titanium oxide, or may be at least partly reacted with titanium oxide to form compound titanium oxides. The structure of the titanium oxide which constitutes a matrix of the film may be either amorphous or crystalline. Similarly, the structure of the oxides which are present in the matrix, or of compound titanium oxides, if they are formed, may be either amorphous or crystalline.

The content of metal oxides selected from silicon, zinc, zirconium, and aluminum oxides in titanium oxide is preferably selected such that the atomic ratio of the total amounts of these metals (M) to the amount of titanium (M/Ti) is between 0.1 and 50 atomic percent. Outside this range, a high photocatalytic activity can not always be obtained. A more preferred range of M/Ti is between 1 and 30 atomic percent.

It is known that titanium oxide can exhibit its photocatalytic activity by absorption of visible light if it is doped with a transition metal to partially form an oxygen defect structure. The titanium oxide used as a photocatalyst in the present invention may be such a doped titanium oxide which can respond to visible light.

A preferred transition metal used as a dopant may be selected from the group consisting of V, Zn, Ru, Rh, Pt, Ag, Pd, and Cu. Some metals can provide an additional function due to their own properties, such as an antimicrobial function which is provided by Zn, Ag, or Cu.

The thickness of the photocatalytic film with which glass fibers are coated is preferably in the range of from 10 nanometers to 2.0 micrometers. With a film thickness of less than 10 nanometers, a sufficient photocatalytic activity can not always be obtained. If the film thickness is greater than 2.0 micrometers, the thickness may become uneven, and discontinuities may form easily, thereby causing cracking and detachment of the film. In addition, the matter to be decomposed is grime, as the thickness of a titanium oxide film increases, the amount of grime deposited on the film tends to increase. As a result, in an environment such as an indoor environment where only a small quantity of light is expected, it takes a prolonged period of time to decompose the deposited grime, so the grime becomes more observable. A more preferable film thickness is in the range of from 20 nanometers to 0.8 micrometers. Within this range, a photocatalytic composite material having an increased photocatalytic activity and minimized cracking and detachment can be obtained.

A photocatalytic composite material comprising glass fibers as a substrate according to the present invention may be colored for the purpose of imparting an attractive appearance, for example. Coloring may be achieved by various methods including use of colored glass fibers, formation of a colored coating film on the glass fibers using a pigmented coating, or addition of a pigment within the photocatalytic film. When a pigmented coating is used, the glass fibers may be initially coated with a pigmented coating to form a colored coating film on which a photocatalytic film is then formed, or they may be initially coated with a photocatalytic film and then with a colored coating film.

The pigment which is present in the pigmented coating is preferably an inorganic pigment, since an organic pigment, although it can be used, may be decomposed by the oxidizing ability of the photocatalyst. For the same reason, with respect to a binder in the pigmented coating, it is preferable to use a binder which is difficult to decompose such as alumina, a silicone resin, silica, or titanium oxide, or its precursor.

The thickness of the colored coating film may vary depending on the type of the pigment present therein and its opacity, and it is preferably between about 0.1 to 100 micrometers. Glass fibers themselves are glossy, but their gloss may be impaired by coating with titanium oxide or by coloring. In such cases, a glossy coating film may be formed on the colored coating film, if desired.

For a substrate other than a glass fiber mass, the surface of the substrate or the photocatalytic film may be colored with a pigment in the same manner as described above.

A photocatalytic composite material according to the present invention is produced by vapor deposition. The process therefor comprises a vapor deposition step in which the surface of a substrate which has been heated at a temperature of 100 - 300 °C is brought into contact with titanium tetrachloride vapor and water vapor to form a film of a titanium oxide precursor on the surface of the substrate, and a heating step in which the substrate is then heated in an oxidizing atmosphere to form a photocatalytic continuous film of titanium oxide on the surface of the substrate.

For a substrate of a mass of inorganic fibers, vapor deposition is performed on fibers which have been gathered or otherwise processed to form a mass, thereby obtaining a photocatalytic composite material in which the individual fibers are coated with a photocatalytic continuous film. If inorganic fibers are coated with a photocatalytic film before they are processed to form a gathered mass such as yarn or woven fabric, it is possible for the resulting photocatalytic film to be injured and detached during processing to gather them into a mass, in which case it is difficult to stably produce a fibrous product in which the surfaces of the fibers are coated with a photocatalytic continuous film.

When vapor deposition is applied to a fibrous mass such as glass cloth, there is a concern that a titanium oxide film is not formed on the surfaces of the fibers in those portions where fibers contact each other, such as intersection points of yarns or fibers and fiber contacting points inside yarns, due to intimate contact of fibers with each other.

This concern is true for a wet process which is performed by immersion in a solution. Thus, it is not easy for a wet process to form a continuous film of titanium oxide on the individual fibers constituting glass cloth, for example.

However, in a vapor deposition process using titanium tetrachloride which is employed in the present invention, titanium tetrachloride vapor penetrates into extremely narrow spaces, so a titanium oxide film is formed in those portions where fibers contact each other, and the individual fibers in the glass cloth are completely coated with a photocatalytic film. Thus, a vapor deposition process can coat the individual fibers of a fibrous mass with a photocatalytic film even if the film is formed after the fibers are processed to form a gathered mass such as woven fabric.

Similarly, in the case of a porous substrate, titanium tetrachloride vapor reaches the inside of the pores of the substrate, so it is possible to coat even the inside of the pores with a photocatalytic film.

In addition to titanium tetrachloride, it is theoretically possible to use a titanium alkoxide or its partial hydrolyzate as a material for vapor deposition. However, titanium tetrachloride is easy for use in film formation by vapor deposition due to its low boiling point of 136.4 °C, and it is also advantageous in terms of performance, since it has low shrinkage during film formation as described below, thereby making it possible to form a thin continuous film of titanium oxide of good quality on the surfaces of fibers.

In the vapor deposition step, titanium tetrachloride is hydrolyzed at least partly to form a titanium oxide precursor such as titanium oxychloride which is highly viscous, and the precursor is deposited on the surface of a substrate, such as a glass fiber mass, which has been heated at a predetermined temperature. The precursor deposited on the fibers becomes fluid since its viscosity is decreased by the effect of the heat of the glass fibers, thereby resulting in the formation of a continuous film of the titanium oxide precursor having an almost uniform thickness. In the subsequent heating step, hydrolysis of the precursor proceeds further with eliminating hydrogen chloride, and the hydrolyzate is dehydrated and condensed to form a continuous film of titanium oxide on the fiber surface.

The film of a titanium oxide precursor derived from titanium tetrachloride formed in the vapor deposition step does not contain any organic moieties. Therefore, shrinkage of the coating during the subsequent heating step is minimized, and the titanium oxide film which is finally formed becomes a continuous film which is substantially free from cracks and detachment. On the other hand, if a film of titanium oxide is formed by the sol-gel method or by immersion in a solution which contains an organic resin, the resulting titanium oxide film shrinks greatly during the heating step due to decomposition and vaporization of organic substances, thereby forming a titanium oxide film including cracks and detached portions, and this is not a continuous film.

For each of titanium tetrachloride vapor and water vapor, it is preferable to dilute the vapor with dry air or an inert gas (e.g., argon or nitrogen) to a concentration of 0.1% - 10% (vol%) prior to use for vapor deposition. If the concentration is less than 0.1%, a high film-forming rate cannot be obtained. If it is greater than 10%, an increased proportion of titanium tetrachloride vapor and water vapor are consumed by a reaction of these two vapors in locations where they are mixed before they reach the substrate, so the availability of the titanium tetrachloride vapor for deposition is decreased. A dilute titanium tetrachloride vapor can be prepared by bubbling, i.e., by passing a diluting gas (carrier gas), which is dry air or an inert gas, through liquid titanium tetrachloride in a container in a conventional manner. A dilute water vapor can be prepared by adding water to a diluting gas for moistening.

In order to expedite vapor deposition, it is preferable to mix titanium tetrachloride vapor and water vapor before they contact a substrate (e.g., a fibrous mass) in a vapor deposition apparatus. Although this mixing may be performed before these two vapors are introduced into the vapor deposition apparatus, they can be satisfactorily mixed in the vapor deposition apparatus. Premature mixing causes hydrolyzation of titanium tetrachloride to excessively proceed before the vapor reaches the substrate, thereby decreasing the availability of titanium tetrachloride and the film forming rate.

The proportions of titanium tetrachloride vapor and water vapor are preferably such that the molar ratio of H₂O/TiCl₄ is in the range of 0.05 - 4. If this molar ratio is greater than 4, hydrolysis and condensation of titanium tetrachloride proceed to an undesired level in the vapor phase prior to deposition on the substrate. As a result, a large amount of fine titanium oxide particles may be formed, and deposition on the glass fibers may become non-uniform. The molar ratio is more preferably in the range of 0.05 - 1

Vapor deposition of titanium tetrachloride is performed at a substrate temperature of 100 - 300°C. Namely, during vapor deposition, the substrate is heated at 100 - 300 °C. Thus, it is possible to allow the titanium oxide precursor deposited on the substrate by vapor deposition to have a uniform film thickness and hence form a continuous titanium oxide film in a stable manner. The substrate temperature during vapor deposition is preferably in the range of 150 - 250°C. If the temperature of the substrate is lower than 100 °C during vapor deposition, the resulting titanium oxide film has a decreased adhesion to the substrate, and it is easy for the film to be cracked, so a continuous film cannot be formed in a stable manner. At a substrate temperature higher than 300 °C, film formation by vapor deposition proceeds non-uniformly, and it becomes difficult to obtain a titanium oxide film having a smooth surface and good adhesion. As a result, even if the resulting photocatalytic film is a continuous film, it has a decreased durability.

The substrate temperature can be achieved by preheating the substrate prior to vapor deposition. The substrate may be preheated in the vapor deposition apparatus. When the process is performed by a continuous operation, the substrate is preheated outside the vapor deposition apparatus before it is introduced into the apparatus. An appropriate heating device may be provided in order to prevent a temperature drop of the substrate during vapor deposition. In the case of a continuous operation, since the inside of the vapor deposition apparatus is heated by the radiation from the heated substrate, it may be not be necessary to provide a heating device for maintaining the substrate temperature.

Vapor deposition of titanium tetrachloride can be performed at atmospheric pressure as long as the temperature inside the vapor deposition apparatus is elevated to a certain degree due to radiation from the heated substrate or the like. In this case, vapor deposition can be carried out by merely spraying titanium tetrachloride vapor and water vapor onto the substrate to allow them to contact with the substrate in a closed chamber. Because a reduced pressure is not needed, the apparatus and operating cost are not significantly different from those required for mere coating by application.

In the subsequent heating step, the substrate having a continuous film of a titanium oxide precursor obtained in the vapor deposition step is heated to convert the precursor to titanium oxide and form a photocatalytic continuous film of titanium oxide on the surface of the substrate. This heating is carried out in an oxidizing atmosphere such as air. Preferably, the heating atmosphere contains water vapor as is the case with atmospheric air. If necessary, water vapor may be added to the heating atmosphere.

The heating temperature can be selected from the range of 100 - 1000 °C. In order to obtain an increased photocatalytic activity, the heating temperature is preferably in the range of 250 - 800 °C and more preferably in the range of 300 - 600 °C. The duration of heating varies depending on the temperature and the composition of the thin film, but it is preferably at most 120 minutes from an industrial standpoint.

When the heating temperature is in the range of 300 - 600 °C, it is possible to form a photocatalytic continuous film of crystalline titanium oxide in anatase form having a fine average crystallite diameter of 50 nm or smaller. Such a photocatalytic film has a very high activity and good adhesion to the substrate, so it provides a photocatalytic composite material with high activity and good durability. In this case, the duration of heating is preferably between 30 and 60 minutes. If it is shorter than 30 minutes, crystallization may become insufficient. Heating for longer than 60 minutes has a tendency to coarsen the crystallite diameter.

In the past, it has not been attempted to control the crystallite diameter of titanium oxide formed by vapor deposition. According to the present invention, it becomes possible to form a photocatalytic titanium oxide film having a fine average crystallite diameter of at most 50 nm and hence a high activity and good resistance to peeling with relatively low costs by controlling the substrate temperature in vapor deposition and the conditions (temperature and duration) for the subsequent heating.

The thickness of the continuous titanium oxide film formed in the vapor deposition step can be adjusted by parameters such as the degree of dilution of titanium tetrachloride vapor (which depends on the temperature of the titanium tetrachloride in a container for bubbling and the flow rate of the diluting gas), and the length of time for which the titanium tetrachloride vapor and water vapor contact the substrate.

The amount of film formation for each operation in the vapor deposition step is preferably at most 500 nm in terms of the film thickness after the heating step. If it is greater than this limit, the volume shrinkage of the film in the heating step becomes significant, and a continuous film without cracks and detachment can not alwasys be obtained. When it is desired to form a photocatalytic film having a thickness of greater than 500 nm, it is preferred to repeat the vapor deposition and heating steps until a desired film thickness is obtained.

In a process according to the present invention, it is preferred to purify by distillation the titanium tetrachloride which is used in the vapor deposition step. The purity of titanium tetrachloride after purification by distillation is preferably at least 99.9%. Use of a pure titanium tetrachloride obtained by distillation makes it possible to produce a highly active photocatalytic composite material in a stable manner.

In the vapor deposition step and the subsequent heating step of a process of the present invention, acidic gases such as hydrogen chloride and chlorine are liberated as titanium tetrachloride is hydrolyzed, and various titanium compounds including oxides of titanium such as titanium oxychloride, titanium hydroxide, and titanium oxide, as well as unreacted titanium tetrachloride are produced as by-products. The process of the present invention may further include a treatment step for removal of acidic gases and/or titanium compounds produced in at least one of the vapor deposition and heating steps. Acidic gases may cause the apparatus to corrode and may adversely affect the environment if discharged into the atmosphere, so they are preferably removed. Titanium compounds such as unreacted titanium tetrachloride and oxides of titanium, if remaining in the apparatus unnecessarily, may deposit on the vapor-deposited titanium oxide film to cause detachment and powdering (chalking) of the film, or may contaminate the apparatus and cause problems in commercial production.

A preferable treatment method for removing acidic gases is washing in which an alkaline solution is brought into contact with these gases in view of its reliable effect, although other methods may be employed. Removal of titanium compounds may be performed by addition of water vapor to cause hydrolyzation of these compounds to form fine particles, which are then separated, or by adsorptive removal in a column packed with an adsorbent.

During the formation of a continuous titanium oxide film by vapor deposition, a vapor of a compound of at least one element selected from silicon, zinc, zirconium, and aluminum may be incorporated into the titanium tetrachloride vapor. Thus, it is possible to produce a photocatalytic composite material in which the titanium oxide film contains at least one of silicon oxide, zinc oxide, zirconium oxide, and aluminum oxide. The species of the compound include halides, oxyhalides, and alkoxides. For the same reason as described above with respect to titanium tetrachloride, halides and oxyhalides which are inorganic are preferred.

Similarly, when it is desired to form a titanium oxide film doped with a transition metal, a small amount of a vapor of a transition metal compound, preferably a halide or oxyhalide, is incorporated into the titanium tetrachloride vapor.

A photocatalytic composite material according to the present invention can be colored to a desired color. The possible coloring methods are as described above. When a pigmented coating which contains an inorganic pigment is used, it can be applied directly to the substrate or atop the photocatalytic film. Application of the coating atop the photocatalytic film may result in the loss of some active sites of the photocatalytic film and thus may result in a decrease in activity. Therefore, when importance is attached to activity, the substrate is preferably colored before the formation of a continuous titanium oxide film thereon. Although a pigmented coating may be applied by any suitable method such as dipping and spraying, a dry coating method such as spraying is preferable since it can makes the resulting colored coating film flat and smooth. Following application, the coated film is hardened by drying and, if necessary, heating.

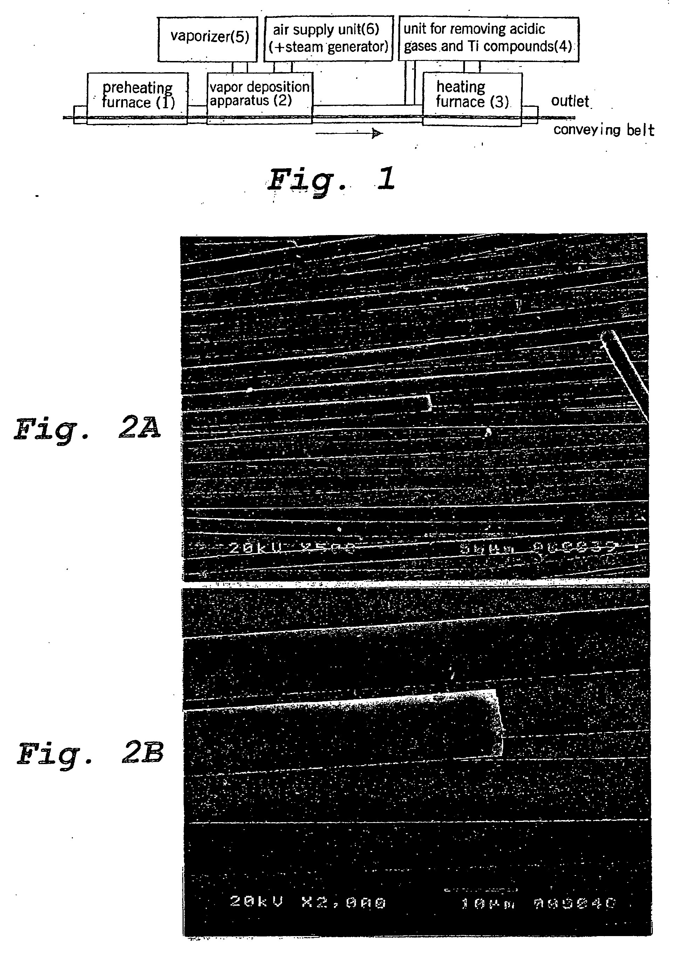

It is preferable to produce a photocatalytic composite material according to the present invention using a continuous type manufacturing system as shown in Figure 1, since it can cope with a roll form of a fibrous mass and is capable of being used for mass production.

In the manufacturing system shown in Figure 1, a substrate (e.g., a mass of glass fibers) which is placed on a belt is passed through a preheating furnace (1) for preheating and then transferred to a vapor deposition apparatus (2). In a vaporizer (5), an inert gas or dry air is passed through liquid titanium tetrachloride in a vessel to generate a dilute titanium tetrachloride vapor, which is introduced into the vapor deposition apparatus (2), by spraying through a nozzle, for example. From an air supply unit (6), a moisturized air, i.e, a dilute water vapor, which contains a certain amount of moisture supplied from a steam generator is also introduced into the vapor deposition apparatus (2). The dilute titanium tetrachloride vapor and the dilute water vapor are mixed in the vapor deposition apparatus (2), and while titanium tetrachloride is partially hydrolyzed, these vapors are brought into contact with the surface of the substrate, resulting in the deposition of a titanium oxide precursor on the surface. The substrate exiting from the vapor deposition apparatus is passed into a heating furnace (3) having a plurality of heating zones, the temperatures of which can be set independently of each other, and it is heated therein. The manufacturing system includes a unit (4) for withdrawing by suction acidic gases and titanium oxychloride and similar by-products produced in the above-mentioned steps and treating them for removal outside the system.

A photocatalytic composite material according to the present invention develops an environmental depollution function due to its photocatalytic activity when irradiated with radiation having an energy higher than the band gap of titanium oxide. As a result, it exhibits significant favorable effects such as decomposition, removal, or loss of harmfulness of various harmful substances or fouling.

The photocatalytic composite material can be widely used in the form of a fibrous product having its effect on purification or depollution of air or water, deodorization, antimicrobial and antifungal activities, and decomposition of deposited grime and harmful substances.

Fibrous products which are prepared from a photocatalytic composite material according to the present invention and which have environmental depollution functions can find application, for example, in clothes, bedclothes, curtains, tablecloths and table mats, carpets, wallcoverings, building sheets, tents, car interior materials, kitchen wares and facilities (e.g., kitchen counters, dish towels, etc.), and bathroom facilities (e.g., bathtub linings, panels for ready-made bathrooms, etc.).

A photocatalytic composite material in a form other than fibers is useful for various applications including, for example, building materials, windowpanes, roofings, stonework, tunnel interior coverings, road insulation barriers, sign panels, metal and ceramic porous bodies, and metal and ceramic particles.

### Examples

### (Example 1)

Photocatalytic composite materials of Runs Nos. 1 - 10 which comprised a mass of glass fibers as a substrate were prepared in the following manner.
No. 1:
   A silica wool of pure silica fibers having a thickness of about 10 mm (fiber diameter: about 8.0 µm) was cut into a piece about 100 mm square, and the piece was used as a test piece.
   Argon was passed into liquid titanium tetrachloride which had been purified by distillation (purity: 99.99 mass %), and the dilute titanium tetrachloride vapor which was generated was supplied to a vapor deposition apparatus. At the same time, moisturized air which contained water vapor in an amount sufficient to give a H₂O/TiCl₄ molar ratio of 3 was supplied to the vapor deposition apparatus and mixed with the titanium tetrachloride vapor therein. The test piece was introduced into the vapor deposition apparatus at 25 °C and brought into contact with the mixed vapor for about 300 seconds to effect vapor deposition. Subsequently, the test piece was preheated for 3 minutes at 200 °C in a preheating zone of a heating furnace and then heated for 60 minutes at 500 °C in a heating zone of the furnace, resulting in the formation of a photocatalytic composite material.
   Observation of the appearance of the composite material under an SEM revealed that there were cracks and detachment of the film on the surface of the fibers (filaments), and the film was not a continuous film. The film thickness was about 300 nm.
No. 2:
   A twilled cloth of pure silica fibers (fiber diameter: about 8.0 µm, cloth thickness: 0.6 mm, size: about 100 mm square) was used as a test piece, and it was subjected to vapor deposition in the same manner as in Run No. 1 except that the test piece was preheated prior to vapor deposition such that the temperature of the substrate at the time of vapor deposition was 200 °C, thereby resulting in the formation of a silica cloth coated with a titanium oxide film. Upon SEM observation of this composite material, it was confirmed that there were no cracks, detachment, or peeling of the film on the surface of the fibers and that the fibers were coated with a continuous film of titanium oxide having a thickness of about 400 nm.
No.3:
   A silica cloth coated with a titanium oxide film was prepared in the same manner as in Run No. 2 except that the duration of contact with the mixed vapor was 500 seconds. Upon SEM observation of this composite material, it was confirmed that there were no cracks, detachment, or peeling of the film on the surface of the fibers and that the fibers were coated with a continuous film of titanium oxide having a thickness of about 500 nm.
No.4:
   A silica cloth coated with a silicon oxide-containing titanium oxide film was prepared in the same manner as described in Run No. 2 except that a silicon tetrachloride vapor was supplied to the interior of the vapor deposition chamber in addition to the titanium tetrachloride vapor. The content of silicon oxide in the film determined by SIMS (secondary ion mass spectroscopy) was about 25% in terms of the atomic ratio of metals (Si/Ti). The titanium oxide-based film formed on the surface of the fibers was a continuous film which had a thickness of about 400 nm and was free from cracks, detachment and peeling of the film.
No. 5:
   Using a plain-woven cloth of E-glass fibers (cloth thickness: 0.18 mm, thread count per inch: 42 warps and 32 wefts, size: about 100 mm square) as a test piece, a glass cloth coated with a titanium oxide film was prepared in the same manner as described in Run No. 1 except that the heating temperature was 450°C. The appearance and thickness of the film observed by SEM were the same as those in Run No. 1.
No. 6:
   Using a plain-woven cloth of T-glass fibers (cloth thickness: 0.6 mm, size: about 100 mm square) as a test piece, a glass cloth coated with a titanium oxide film was prepared in the same manner as described in Run No. 2 except that the heating temperature was 450°C. Upon SEM observation, the film was found to be a continuous film and had a thickness of 350 nm.
No.7:
   Using a yarn of E-glass fibers (fiber diameter: about 8 µm, twisted, length: about 20 meters) as a test piece, a photocatalytic composite material was obtained in the same manner as described in Run No. 6. Upon SEM observation, no cracks, detachment, or peeling of the film were found on the surface of the fibers which constituted the yarn, and the film was confirmed to be a continuous titanium oxide film having a thickness of about 350 nm.
No.8:
   A T-glass cloth coated with a titanium oxide film was prepared in the same manner as described in Run No. 6 except that unpurified titanium tetrachloride which had a purity of less than 99% and hence had a slightly yellowish color was used. A titanium oxide film having a thickness on the order of 400 nm was found on the surface of the fibers of the resulting composite material, and it was found to be a continuous film upon SEM observation.
No.9:
   A silica cloth coated with a titanium oxide film was prepared in the same manner as in Run No. 2 except that the H₂OPTiCl₄ molar ratio was changed to 0.5. Upon SEM observation, no cracks, detachment, or peeling of the film were found on the surface of the fibers, and the fibers were coated with a continuous film of titanium oxide having a thickness of about 400 nm.
No. 10:
   A silica cloth coated with a titanium oxide film was prepared in the same manner as in Run No. 2 except that the preheating temperature was elevated such that the temperature of the substrate at the time of vapor deposition was 400°C. A continuous film of titanium oxide was formed, but it had coarse crystals having an average crystallite diameter which was far greater than 50 nm.
   No.11: Wet process
   The same silica wool as used in Run No. 1 was used as a test piece, and it was immersed for 30 seconds in a solution prepared by dissolving a mixture of 10 grams of titanium isopropoxide and 10 grams of an organic resin in a liquid mixture of 200 grams of ethanol, 1 gram of nitric acid, and 1.5 grams of H₂O. The test piece was then dried for 1 hour at 60 °C and subsequently heated for 5 hours at 450 °C, resulting in the formation of a titanium oxide film on the surface of the fibers of the silica wool.

Upon SEM observation of the resulting composite material, numerous discontinuities of the coated film such as detached portions, steps formed by overlapped coating, and deposition of powdered titanium oxide were found on the surface of the fibers, so the film was not continuous. It is predicted that such powdering or detachment of the coated film causes the durability of the coated film to decrease, thereby resulting in a rapid loss of its photocatalytic activity, particularly in use under conditions where the material may be subjected to rubbing.

The above-described photocatalytic composite materials were subjected to an acetaldhyde decomposition test in the following manner to evaluate their photocatalytic activities.

### Acetaldehyde Decomposition Test:

A test sample measuring about 50 mm square which was cut from each composite material to be tested was put into a quartz reaction cell, and the cell was connected to a closed circulating line system having a total internal volume of about 3.0 liter. The test piece (yarn) in Run No. 7 was placed on a glass plate having internal dimensions of 50 mm × 50 mm for use in the test. Acetaldehyde which had been diluted with air (to a concentration of about 240 ppm) was introduced into the system and circulated therein, and the sample was irradiated with UV light from a 250 W high-pressure mercury-vapor lamp via a UV filter (Toshiba UV-31). The intensity of the UV light at a wavelength of 366 nm on the surface of the sample was 0.8 mW/cm². While the UV irradiation was continued, the concentration of acetaldehyde in the system was determined by gas chromatography. The photocatalytic activity was evaluated in terms of percent removal of acetaldehyde after irradiation for 1 hour.

The test results are shown in Table 1 along with the conditions for production and the results of SEM observation with respect to continuity of the film.

**Table 1**

| Run No. | Substrate | Purity of TiCl₄¹ | Photocatalyst | Film forming method | Temp. of substrate (°C) | Duration of contact (seconds) | Heating temp. ( C) | Appearance of film | Activity² (%) |
|---|---|---|---|---|---|---|---|---|---|
| 1 | silica wool | pure | Ti oxide | VD³ | 25* | 300 | 500 | Cracked | 90 |
| 2 | silica cloth | pure | Ti oxide | VD | 200 | 300 | 500 | Continuous | 92 |
| 3 | silica cloth | pure | Ti oxide | VD | 200 | 500 | 500 | Continuous | 96 |
| 4 | silica cloth | pure | Ti oxide containing SiO₂ | VD | 200 | 300 | 500 | Continuous | 94 |
| 5 | E-glass cloth | pure | Ti oxide | VD | 25* | 300 | 450 | Cracked | 80 |
| 6 | T-glass cloth | pure | Ti oxide | VD | 200 | 300 | 450 | Continuous | 85 |
| 7 | E-glass yarn | pure | Ti oxide | VD | 200 | 300 | 450 | Continuous | 85 |
| 8 | T-glass cloth | unpurified | Ti oxide | VD | 200 | 300 | 450 | Continuous | 70 |
| 9 | silica cloth | pure | Ti oxide | VD | 200 | 300 | 500 | Continuous | 98 |
| 10 | silica cloth | pure | Ti oxide | VD | 400* | 300 | 500 | Continuous | 40 |
| 11 | silica wool | pure | Ti oxide | wet process | --- | --- | 450 | Discontinous | 78 |

| | | | | | | | | | |
|---|---|---|---|---|---|---|---|---|---|
| ¹pure: purity > 99.99 mass %, unpurified: purity < 99 mass %; | | | | | | | | | |
| ²activity: rate of acetaldehyde decomposition; ³VD = vapor deposition | | | | | | | | | |
| *outside the range defined herein. | | | | | | | | | |

As shown in Table 1, each of the photocatalytic composite materials according to the present invention having a continuous film of crystalline titanium oxide formed on the surface of fibers using titanium tetrachloride which had been purified by distillation exhibited a high photocatalytic activity of at least 85% decomposition of acetaldehyde.

In Run No. 8 in which the titanium tetrachloride was not purified, a continuous film could be formed, but its photocatalytic activity was decreased due to the impurities which were present in the titanium tetrachloride and which remained in the titanium oxide film.

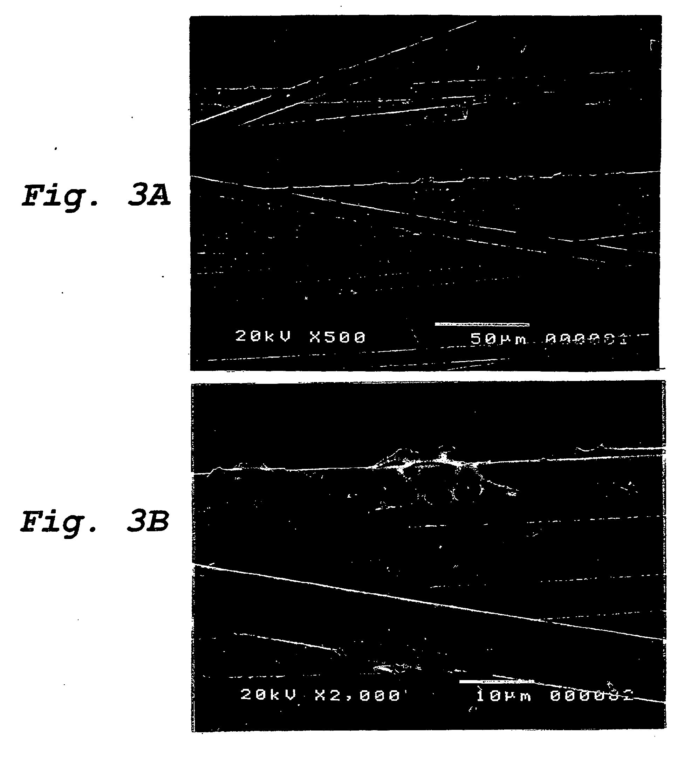

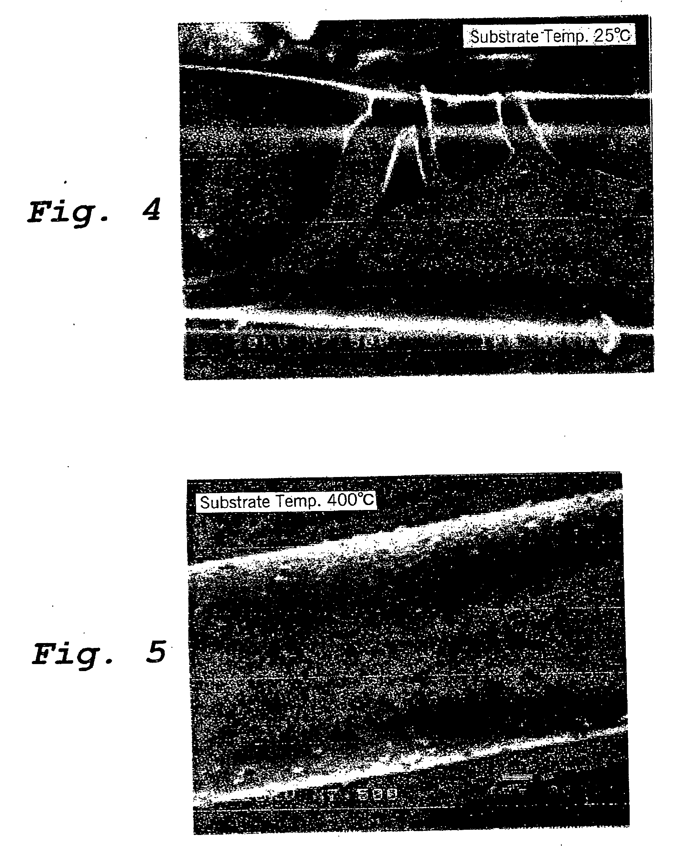

SEM images of the photocatalytic composite material obtained in Run No. 2 are shown in Figure 2A and Figure 2B (with magnifications of 500X and 2000X, respectively). Similarly, SEM images of the photocatalytic composite material obtained by the wet process in Run No. 11 are shown in Figure 3A and Figure 3B. Furthermore, SEM images (magnifications of 7500X) of the photocatalytic composite materials obtained in Run No. 5 and Run No. 11 in which the temperature of the substrate at the time of vapor deposition was outside the range defined herein (25 °C and 400 °C, respectively) are shown in Figure 4 and Figure 5.

In the case of a photocatalytic composite material according to the present invention, it is apparent from Figures 2A and 2B that a continuous film is formed on the surface of each fiber (filament) in such a state that the individual surface of each of the discrete fibers can be identified. In the other photocatalytic composite materials according to the present invention, a similar continuous film was formed. In the SEM images of Figures 2A and 2B, unavoidable irregularities are found at the end of the fibers, since these images intentionally show enlarged images of fiber ends in order to confirm the formation of a continuous film. Thus, these irregularities do not disconfirm the formation of a continuous film. The film is completely continuous in areas other than the ends of the fibers.

In contrast, as can be seen from Figures 3A and 3B, a coated film formed by a wet process is not a continuous film since partial peeled-off portions of the film are found around. This photocatalytic composite material of Run No. 11 had a low photocatalytic activity from the beginning due to the discontinuity of the titanium oxide film formed on the surface of the fibers. In addition, because of the low durability of the film, it is anticipated that the film will be further peeled off during use, so the photocatalytic activity seems to decrease rapidly in use.

As shown in Figure 4, when the temperature of the substrate at the time of vapor deposition was as low as 25 °C, cracks were formed generally in a circumferential direction in the resulting photocatalytic film, and a continuous film could not be formed. Such a photocatalytic composite material showed a relatively high photocatalytic activity initially, as shown in Runs Nos. 1 and 5 of Table 1, provided that the average crystallite diameter of titanium oxide is small. However, since the photocatalytic film tends to easily peel off, the activity will not last long.

On the other hand, if the temperature of the substrate at the time of vapor deposition is as high as 400 °C, the surface of the photocatalytic film was found to be rough, as shown in Figure 5, with coarse crystal grains. This was because the crystals became coarse to such a degree that the average crystallite diameter was much greater than 50 nm, as is demonstrated later in Example 3. In such a case, as shown in Run No. 10 of Table 1, even if the photocatalytic film is a continuous film of crystalline titanium oxide, it has a very low photocatalytic activity.

### (Example 2)

Photocatalytic composite materials according to the present invention (Runs Nos. 12 and 13) were prepared under the following conditions.
Run No. 12:
   The same glass cloth of T-glass fibers as used in Run No. 6 of Example 1 was coated by spraying with a commercially available ceramic-type coating composition which contained an inorganic pigment (pale blue color) and then with a ceramic-type gloss coating composition. Subsequently, the glass cloth was heated for 30 minutes at 400 °C to cure the colored coating. Then, a coating of a continuous titanium oxide film was formed in the same manner as in Run No. 2 of Example 1 except that the heating temperature was 450 °C to prepare a photocatalytic composite material of glossy blue color according to the present invention.
Run No. 13:
   A composite material comprising a glass cloth of T-glass fibers coated with a continuous titanium oxide film was prepared in the same manner as in Run No. 6 of Example 1. Then, it was spray coated with the same ceramic type coating composition containing an inorganic pigment as used in Run No. 12. The colored coating was cured by drying for 24 hours at room temperature to prepare a photocatalytic composite material according to the present invention which had a blue colored appearance.

Samples for evaluating photocatalytic activity were cut from the above-described photocatalytic composite materials according to the present invention (Runs Nos. 12 and 13), and an acetaldehyde decomposition test was performed thereon in the same manner as in Example 1 to evaluate their catalytic activity.

As a result, the rate of acetaldehyde decomposition was 65% for Run No. 12 and 37% for Run No. 13. Thus, it was confirmed that these colored photocatalytic composite materials functioned as a photocatalyst. The reason why the rate of decomposition in Run No. 13 was lower than that in Run No. 12 is that the catalytic active sites of the continuous titanium oxide film were covered with the colored coating film in Run No. 13. Nevertheless, it is possible to maintain sufficient photocatalytic properties by optimizing the curing conditions for the colored coating film, its thickness, and similar parameters.

In the above examples, in the manufacturing process of the photocatalytic composite materials by vapor deposition, acidic gases and titanium compounds were evolved from the vapor deposition apparatus and from the heating furnace, and they were disposed of by connecting to the system a suction type discharging and treating unit, in which the acidic gases and titanium compounds were neutralized and washed with an alkaline solution. The titanium compounds were precipitated from the solution, and removed therefrom by decantation.

### (Example 3)

A 40 mm square quartz plate was used as a substrate, and a photocatalytic composite material having a continuous titanium oxide film on the quartz substrate was prepared by vapor deposition with pure titanium tetrachloride in the same manner as in Run No. 2 of Example 1. In this example, the temperature of the substrate (plate) at the time of vapor deposition was varied in the range of 25 - 500 °C. The duration of contact with the vapors was 300 seconds, and the heating following vapor deposition was performed for 60 minutes at 500°C.

A continuous titanium oxide film was formed in all the cases except that the temperature of the substrate was 25 °C. A cross section of the photocatalytic film was observed under SEM, and the average crystallite diameter of titanium oxide was determined by the intercept method.

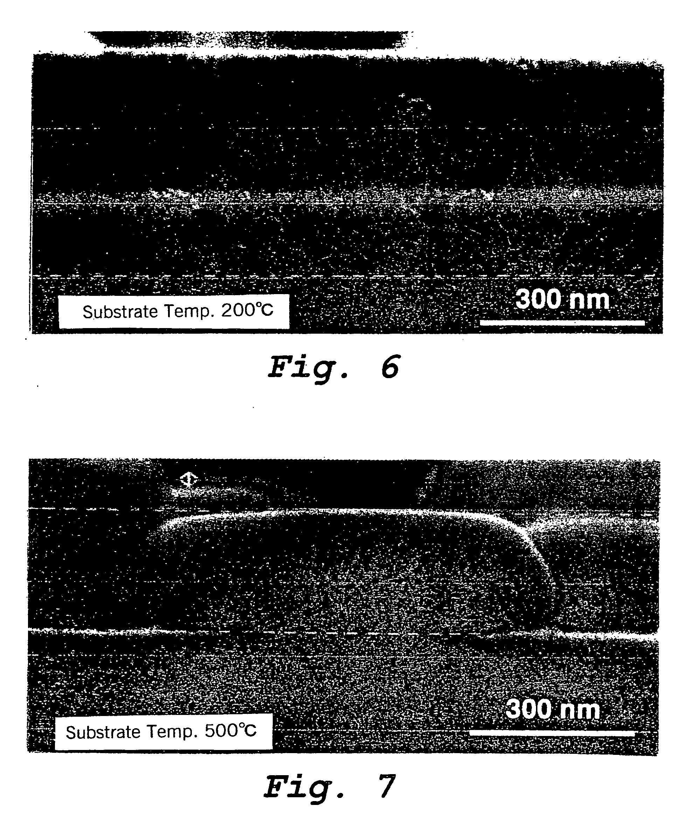

Cross-sectional SEM images of the photocatalytic films in which the temperature of the substrate (plate) at the time of vapor deposition was 200 °C and 500 °C are shown in Figures 6 and 7, respectively. It can be seen from these figures that the crystals were fine when the substrate temperature was 200 °C whereas they became very coarse when the substrate temperature was 500 °C.

These photocatalytic composite materials measuring 40 mm square were directly used as samples and were subjected to an acetaldehyde decomposition test in the same manner as in Example 1 except that the initial concentration of acetaldehyde was 250 ppm, the intensity of UV irradiation was 4 mW/cm², and the test time was 2 hours, to evaluate the percent removal of acetaldehyde.

In addition, the adhesion of the titanium oxide film to the substrate was examined by a peel test using an adhesive tape and evaluated as follows:
○: no peeling occurred;
×: peeling occurred.

The test results are shown in Table 2 along with the substrate temperature at the time of vapor deposition.

**Table 2**

| Temperature of substrate (°C) | Average crystallite diameter (nm) | Rate of acetaldehyde decomposition (%) | Adhesion of photocatalytic film |
|---|---|---|---|
| 25* | <10 | 88 | × |
| 100 | 10 | 90 | ○ |
| 150 | 16 | 92 | O |
| 200 | 20 | 98 | O |
| 250 | 30 | 73 | O |
| 300 | 50 | 55 | O |
| 400* | 500 | 38 | × |
| 500* | 600 | 25 | × |

| | | | |
|---|---|---|---|
| *Outside the range defined herein. | | | |

As can be seen from Table 2, when the temperature of the substrate during vapor deposition was in the range of 100 - 300 °C, a photocatalytic composite material having an average crystallite diameter of 50 nm or smaller and having a high photocatalytic activity with good adhesion of the photocatalytic film to the substrate and hence having good durability was obtained. In the case where the substrate temperature was higher than 300 °C, the average crystallite diameter of titanium oxide became greater than 50 nm, and therefore both the photocatalytic activity and adhesion decreased. At a substrate temperature which was lower than 100 °C, the photocatalytic activity was good due to a small average crystallite diameter, but the adhesion of the photocatalytic film to the substrate decreased, so it is predicted that the film is apt to be peeled off, leading to a decreased durability.

## Claims

1. A photocatalytic composite material comprising a mass of inorganic fibers **characterized in that** the surfaces of the individual fibers are coated with a continuous film of a photocatalyst comprising titanium oxide.

2. A photocatalytic composite material as set forth in claim 1 wherein the continuous film is a film formed by vapor deposition.

3. A photocatalytic composite material as set forth in claim 1 or 2 wherein the inorganic fibers are glass fibers.

4. A photocatalytic composite material as set forth in claim 1 or 2 wherein the mass of fibers is in the form of yarn, woven fabric, nonwoven fabric, or wool.

5. A photocatalytic composite material comprising a substrate having an inorganic surface **characterized in that** at least part of the inorganic surface is coated with a continuous film of a photocatalyst comprising crystalline titanium oxide with an average crystallite diameter of 50 nm or smaller which is formed by vapor deposition.

6. A photocatalytic composite material as set forth in claim 2 or 5 wherein the vapor deposition is performed with titanium tetrachloride.

7. A photocatalytic composite material as set forth in claim 1 or 5 wherein the photocatalyst consists essentially of titanum oxide.

8. A photocatalytic composite material as set forth in claim 1 or 5 wherein the photocatalyst further comprises at least one of silicon oxide, zinc oxide, zirconium oxide, and aluminum oxide, in addition to titanium oxide.

9. A photocatalytic composite material as set forth in claim 1 or 5 wherein the photocatalyst is doped with a transition metal oxide.

10. A photocatalytic composite material as set forth in claim 1 or 5 wherein the substrate or the photocatalytic continuous film is colored.

11. A process for producing a photocatalytic composite material as set forth in claim 1, the process being **characterized in that** it comprises a vapor deposition step in which a mass of inorganic fibers which has been heated at a temperature of 100 - 300 °C is brought into contact with titanium tetrachloride vapor and water vapor to form a film comprising a titanium oxide precursor on the surfaces of the individual fibers, and a heating step in which the fibrous mass is heated in an oxidizing atmosphere to convert the precursor film into a continuous film of a photocatalyst comprising titanium oxide.

12. A process as set forth in claim 11 wherein the heating temperature in the heating step is 250 - 800°C.

13. A process as set forth in claim 12 wherein the heating temperature in the heating step is 300 - 600°C.

14. A process for producing a photocatalytic composite material as set forth in claim 5, the process being **characterized in that** it comprises a vapor deposition step in which a substrate having an inorganic surface which has been heated at a temperature of 100 - 300 °C is treated such that at least part of the inorganic surface is brought into contact with titanium tetrachloride vapor and water vapor to form a film comprising a titanium oxide precursor on the surface, and a heating step in which the substrate is heated in an oxidizing atmosphere at a temperature of 300 - 600 °C to convert the precursor film into a continuous film of a photocatalyst comprising crystalline titanium oxide having an average crystallite diameter of 50 nm or smaller.

15. A process as set forth in claim 11 or 14 wherein in the vapor deposition step, the titanium tetrachloride vapor and water vapor are previously mixed before contact with the mass of fibers or with the substrate surface.

16. A process as set forth in claim 11 or 14 wherein the titanium tetrachloride vapor is purified by distillation.

17. A process as set forth in claim 11 or 14 wherein the proportions of the titanium tetrachloride vapor and the water vapor used in the vapor deposition step are such that the H₂O/TiCl₄ molar ratio is in the range of 0.05 - 4.

18. A process as set forth in claim 11 or 14 wherein each of the titanium tetrachloride vapor and the water vapor is diluted with a dry air or an inert gas to a concentration of 0.1 - 10%.

19. A process as set forth in claim 11 or 14 wherein the titanium tetrachloride vapor contains vapor of a compound of at least one element selected from silicon, zinc, zirconium, and aluminum.

20. A process as set forth in claim 11 or 14 wherein the titanium tetrachloride vapor contains vapor of at least one transition metal compound selected from halides and oxyhalides.

21. A process as set forth in claim 11 or 14 wherein the amount of film formation for each operation in the vapor deposition step in terms of the film thickness is at most 500 nm.

22. A process as set forth in claim 21 wherein the vapor deposition step and the heating step are repeated one or more times.

23. A process as set forth in claim 11 or 14 which further includes a step of removing acidic gases and/or titanium compounds generated in the vapor deposition step and/or in the heating step.

24. A process as set forth in claim 11 or 14 wherein the mass of fibers or the substrate is previously colored with a coloring pigment prior to the vapor deposition step.

25. A process as set forth in claim 11 or 14 which further includes a coloring step with an inorganic pigment subsequent to the heating step.

26. A fibrous product having environmental depollution effects comprising a photocatalytic composite material as set forth in any of claims 1 - 4 and claims 6 - 10 in which the substrate is a mass of fibers.

27. A product having environmental depollution effects comprising a photocatalytic composite material as set forth in any of claims 5 - 10.
